# EUROPEAN PATENT APPLICATION

(11) **EP 3 477 752 A1**
(43) Date of publication of application: **01.05.2019**
(21) Application number: 17815680.8
(22) Date of filing: 20.06.2017
(51) Int. Cl.: H01M 8/04014, H01M 8/04007, H01M 8/04119, H01M 8/124

(54) **FUEL CELL SYSTEM COMPRISING HEAT EXCHANGER USING COMBUSTION EXHAUST GAS**

(30) Priority: 23.06.2016 KR 20160078436
(71) Applicant: Kyungdong Navien Co., Ltd., Pyeongtaek-si, Gyeonggi-do 17704 (KR)
(72) Inventor: SON, Seung Kil, Seoul 08501 (KR); SHIN, Seock Jae, Seoul 08501 (KR); PARK, Se Jin, Seoul 08501 (KR); YI, Yong, Seoul 08501 (KR); KIM, Jin Hyung, Seoul 08501 (KR)
(74) Representative: Brann AB
(86) International application number: PCT/KR2017/006434
(87) International publication number: WO 2017/222267

(57) **Abstract**

Disclosed is a fuel cell system in which fuel or air supplied to a burner is preheated using a high-temperature burner off-gas (BOG) discharged from the burner to thus enhancing operation efficiency of the burner. The fuel cell system including a heat exchanger using a BOG includes a hot box formed of a heat insulating material, a fuel cell stack disposed in the hot box and including a cathode, an electrolyte, and an anode, a high-temperature heat exchanger disposed in the hot box, generating a high-temperature anode gas including hydrogen upon receiving a fuel gas, and discharging the anode gas to the anode of the fuel cell stack, a burner disposed in the hot box, generating a high-temperature burner off-gas (BOG) upon receiving a fuel gas and air, and supplying the BOG as a heat source in the fuel cell system, and a recovery heat exchanger disposed in the hot box, installed at a burner air supply line supplying air to the burner from the outside of the hot box, and preheating air supplied to the burner through the burner air supply line using the high-temperature BOG.

## Description

### FIELD

The present disclosure relates to a fuel cell system including a heat exchanger using a burner off-gas (BOG), and more particularly, to a fuel cell system including a heat exchanger using a BOG in which air or fuel supplied to a burner is preheated using a BOG discharged from the burner.

### BACKGROUND

Generally, most of the energy used by humans comes from fossil fuels. However, the use of fossil fuels has serious adverse effects on the environment such as air pollution, acid rain, global warming, and the like, and has low energy efficiency.

Recently, fuel cell stems have been developed to solve the problems associated with the use of fossil fuels. Unlike conventional secondary batteries, fuel cells have a structure in which a hydrogen gas or hydrocarbon as a fuel is supplied to a negative electrode and oxygen is supplied to a positive electrode to generate electricity. That is, the fuel cell may be considered as a power generating device that actually generates electricity although the name is a battery. Basically, a fuel cell uses a method of causing hydrogen and oxygen to electrochemically react each other and converting a difference in energy before and after the reaction into electrical energy, instead of burning fuel.

A fuel cell may be a clean power generation system which has 80% or more thermal efficiency of adding electricity generation amount and heat recovery amount and which does not generate a gas polluting the environment such as NOx, SOx, and the like, and is free of noise and vibration.

A solid oxide fuel cell system generally includes a fuel cell stack producing electricity through a chemical reaction, a fuel treating device supplying hydrogen/hydrocarbon and oxygen to the stack, an inverter device converting the DC power produced in the fuel cell stack to AC power, an arrangement recovery device recovering heat generated in the fuel cell stack, and the like.

The fuel treating device includes a high-temperature heat exchanger generating high-temperature hydrogen from fuel such as natural gas, a burner supplying a heat source necessary for the fuel cell stack and the high-temperature heat exchanger, an auxiliary heat exchanger preheating fuel or air supplied to the fuel cell stack, and the like. Here, the high-temperature heat exchanger, the fuel cell stack, the burner, and the auxiliary heat exchanger, which operate at high temperatures, are installed in a single heat-insulated hot box.

The burner supplies a heat source for operating a fuel cell, and the amount of heat supplied to the system varies according to temperature conditions of fuel and air supplied to the burner. Since a difference between the amount of heat supplied by the burner and the amount of heat required for the system represents system efficiency, the amount of heat discharged to the outside of the hot box must be collected (recovered) as much as possible. To this end, in the fuel cell system, a heat exchanger is additionally provided in the hot box to re-use much heat as possible before being discharged to the outside of the hot box.

A typical example thereof is disclosed in Korean Patent Laid-Open Publication No. 2010-0083027 (entitled: Solid Oxide Fuel Cell System) (Patent document 1). The solid oxide fuel cell system includes a reformer that receives a liquid hydrocarbon-based raw material and generates a hydrogen-rich reformed gas; a heater attached to an outer wall of the reformer to raise a temperature of the reformer to an initial ignition temperature; a desulfurizer which receives a reformed gas discharged from the reformer and removes a sulfur component to generate a fuel gas; a complex heat exchanger raising temperatures of air and the fuel gas discharged from the desulfurizer; a solid oxide fuel cell stack generating electricity upon receiving the fuel gas raised in temperature from the complex heat exchanger by an anode gas inlet and receiving the air raised in temperature from the complex heat exchanger by a cathode gas inlet; and a catalytic combustor receiving a discharge gas of a cathode and an anode discharged from the solid oxide fuel cell stack and burning the received discharge gas to generate a combustion flue gas, wherein the complex heat exchanger performs heat-exchange on the combustion flue gas, the fuel gas, and air, and the solid oxide fuel cell stack, the reformer, the heater, the desulfurizer, and the catalytic combustor are provided in a single hot box.

That is, the high-temperature combustion flue gas discharged from the catalytic combustor serving as a burner is heat-exchanged with the fuel gas and air supplied to the fuel cell stack in the complex heat exchanger to preheat the same, thus enhancing efficiency of the fuel cell system.

However, the heat exchanger provided in the related art fuel cell system as in Patent document 1 is mainly used only for preheating the fuel gas or air supplied to the fuel cell stack and the burner off-gas having a high temperature is still discharged to the outside as is.

In order to solve the problem, it is necessary to develop a fuel cell system having a new arrangement type in which a heat exchanger is installed at an optimal position to maximally recycle a heat source in the hot box.

### SUMMARY

The present disclosure has been developed to meet the needs of the industry, and an aspect of the present disclosure provides a fuel cell system in which fuel or air supplied to a burner is preheated using a high-temperature burner off-gas (BOG) discharged from the burner to thus enhance operation efficiency of the burner.

According to an embodiment of the present disclosure, a fuel cell system including a heat exchanger using a burner off-gas (BOG) includes: a hot box formed of a heat insulating material; a fuel cell stack disposed in the hot box and including a cathode, an electrolyte, and an anode; a high-temperature heat exchanger disposed in the hot box, generating a high-temperature anode gas including hydrogen upon receiving a fuel gas, and discharging the anode gas to the anode of the fuel cell stack; a burner disposed in the hot box, generating a high-temperature burner off-gas (BOG) upon receiving a fuel gas and air, and supplying the BOG as a heat source in the fuel cell system; and a recovery heat exchanger disposed in the hot box, installed at a burner air supply line supplying air to the burner from the outside of the hot box, and preheating air supplied to the burner through the burner air supply line using the high-temperature BOG.

Also, a BOG gas supply line supplying the BOG to the high-temperature heat exchanger may be connected to the burner, and a high-temperature heat exchanger passage gas supply line supplying a high-temperature heat exchanger passage gas produced in the process of generating the anode gas through heat exchange between the BOG and the fuel gas supplied to the high-temperature heat exchanger, to the recovery heat exchanger may be connected to the high-temperature heat exchanger.

Also, one recovery heat exchanger or two or more recovery heat exchangers may be installed at the burner air supply line.

According to another embodiment of the present disclosure, a fuel cell system including a heat exchanger using a burner off-gas (BOG) includes: a hot box formed of a heat insulating material; a fuel cell stack disposed in the hot box and including a cathode, an electrolyte, and an anode; a high-temperature heat exchanger disposed in the hot box, generating a high-temperature anode gas including hydrogen upon receiving a fuel gas, and supplying the anode gas to the anode of the fuel cell stack; a burner disposed in the hot box, generating a high-temperature burner off-gas (BOG) upon receiving a fuel gas and air, and supplying the BOG as a heat source in the fuel cell system; and a recovery heat exchanger disposed in the hot box, installed at a burner fuel gas supply line supplying a fuel gas to the burner from the outside of the hot box, and preheating the fuel gas supplied to the burner through the burner fuel gas supply line using the high-temperature BOG.

Also, a BOG gas supply line supplying the BOG to the high-temperature heat exchanger may be connected to the burner, and a high-temperature heat exchanger passage gas supply line supplying a high-temperature heat exchanger passage gas produced in the process of generating the anode gas through heat exchange between the BOG and the fuel gas supplied to the high-temperature heat exchanger, to the recovery heat exchanger may be connected to the high-temperature heat exchanger.

Also, one recovery heat exchanger or two or more recovery heat exchangers may be installed at the burner fuel gas supply line.

According to another embodiment of the present disclosure, a fuel cell system including a heat exchanger using a burner off-gas (BOG) includes: a hot box formed of a heat insulating material; a fuel cell stack disposed in the hot box and including a cathode, an electrolyte, and an anode; a high-temperature heat exchanger disposed in the hot box, generating a high-temperature anode gas including hydrogen upon receiving a fuel gas, and discharging the anode gas to the anode of the fuel cell stack; a burner disposed in the hot box, generating a high-temperature burner off-gas (BOG) upon receiving a fuel gas and air, and supplying the BOG as a heat source in the fuel cell system; and a recovery heat exchanger disposed in the hot box, installed at a burner anode off-gas (AOG) supply line supplying an AOG discharged from the anode of the fuel cell stack to the burner from the outside of the hot box, and preheating the AOG supplied to the burner through the burner AOG supply line using the high-temperature BOG.

Also, a BOG gas supply line supplying the BOG to the high-temperature heat exchanger may be connected to the burner, and a high-temperature heat exchanger passage gas supply line supplying a high-temperature heat exchanger passage gas produced in the process of generating the anode gas through heat exchange between the BOG and the fuel gas supplied to the high-temperature heat exchanger, to the recovery heat exchanger may be connected to the high-temperature heat exchanger.

Also, one recovery heat exchanger or two or more recovery heat exchangers may be installed at the burner AOG supply line.

Also, the AOG may be heat-exchanged, while passing through a heat storage tank installed on the fuel cell system, and subsequently supplied to the burner AOG supply line.

Also, vapor of the AOG may be separately discharged, while the AOG is passing through a condenser installed on the fuel cell system, and the vapor-free AOG may subsequently be supplied to the burner AOG supply line.

According to the fuel cell system including a heat exchanger using burner off-gas of the present disclosure configured as described above, the amount of heat of air or a fuel gas supplied to the burner may be increased through heat-exchange between the burner off-gas discharged to the outside and air or the fuel gas supplied to the burner installed inside of the hot box from the outside of the hot box, whereby heat efficiency of the overall fuel cell system may be enhanced.

Also, since the amount of heat of air or the fuel gas supplied to the burner may be controlled through heat exchange between a high-temperature burner off-gas and a low-temperature air or fuel gas, a control range of the burner off-gas finally discharged from the burner may be extended.

In addition, by increasing the amount of heat of air supplied to the burner, a supply amount of a fuel gas burned therewith may be reduced, reducing cost for an operation.

### BRIEF DESCRIPTION OF THE DRAWINGS

FIG. 1 is a configuration diagram of a fuel cell system illustrating embodiment 1-1 according to the present disclosure.
FIG. 2 is a configuration diagram of a fuel cell system illustrating embodiment 1-2 according to the present disclosure.
FIG. 3 is a configuration diagram of a fuel cell system illustrating embodiment 1-3 according to the present disclosure.
FIG. 4 is a configuration diagram of a fuel cell system illustrating embodiment 1-4 according to the present disclosure.
FIG. 5 is a configuration diagram of a fuel cell system illustrating embodiment 2-1 according to the present disclosure.
FIG. 6 is a configuration diagram of a fuel cell system illustrating embodiment 2-2 according to the present disclosure.
FIG. 7 is a configuration diagram of a fuel cell system illustrating embodiment 2-3 according to the present disclosure.
FIG. 8 is a configuration diagram of a fuel cell system illustrating embodiment 2-4 according to the present disclosure.
FIG. 9 is a configuration diagram of a fuel cell system illustrating embodiment 3-1 according to the present disclosure.
FIG. 10 is a configuration diagram of a fuel cell system illustrating embodiment 3-2 according to the present disclosure.
FIG. 11 is a configuration diagram of a fuel cell system illustrating embodiment 3-3 according to the present disclosure.
FIG. 12 is a configuration diagram of a fuel cell system illustrating embodiment 3-4 according to the present disclosure.

### DETAILED DESCRIPTION

Hereinafter, a fuel cell including a heat exchange unit for temperature control according to the present disclosure will be described in detail with reference to the accompanying drawings.

The present disclosure may, however, be embodied in different forms and should not be construed as being limited to the embodiments set forth herein. Rather, these embodiments are provided so that this disclosure will be thorough and complete and will fully convey the scope of the present disclosure to those skilled in the art, and the present disclosure is only defined by the scopes of claims. For reference, in describing the present disclosure, if a detailed description of known functions or components associated with the present disclosure unnecessarily obscures the gist of the present disclosure, the detailed description will be omitted.

A fuel cell system including a heat exchanger using a burner off-gas (BOG) according to the present disclosure basically uses a solid oxide fuel cell (SOFC) system. Thus, various embodiments according to the present disclosure will be described in detail on the basis of the SOFC system. However, the technical concept of the present disclosure is not limited thereto and may be applicable to various types of high temperature fuel cell systems using a burner and a heat exchanger.

A chemical reaction in which oxygen and hydrogen are combined to generate water is an exothermic reaction, and thus, the SOFC system is generally operated at a high temperature of 500°C or higher. Accordingly, in the entire fuel cell system, various devices and pipes that operate in a high temperature state are disposed in a hot box formed of a heat insulating material to prevent heat from being discharged to the outside.

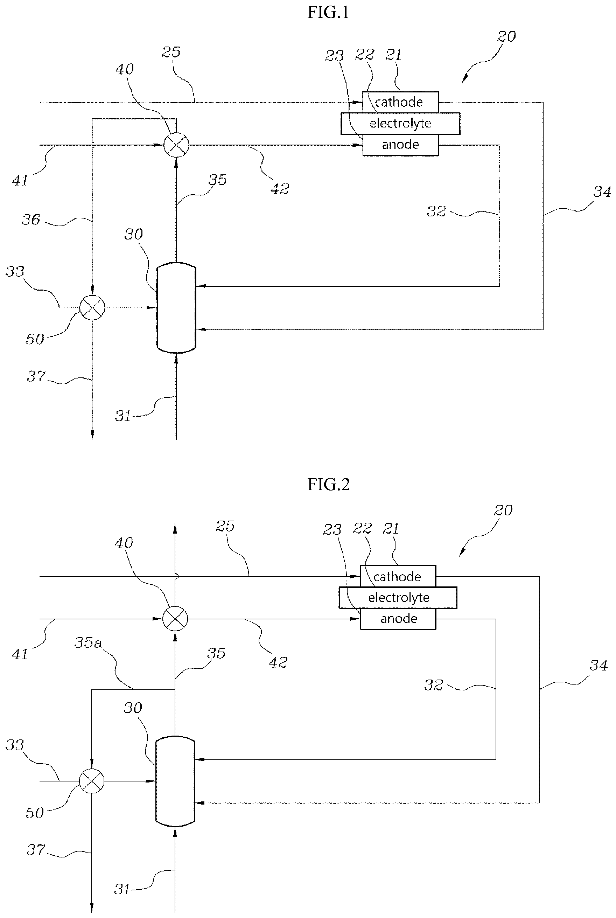

Prior to a detailed description of the present disclosure, devices and pipes installed in the hot box will be briefly described with reference to FIG. 1. Here, the hot box refers to a box including a fuel cell stack 20, a burner 30, and various heat exchange devices, and the like, mounted therein, operated in a high temperature state, and is heat-insulated against the outside.

First, the fuel cell stack 20, which is a core device for producing electricity, is disposed inside the hot box. The fuel cell stack 20 is formed by stacking unit cells including a cathode 21, an electrolyte 22, and an anode 23 in layers.

The cathode 21 is connected to an air supply line 25 for stack (or stack air supply line 25) for supplying air (oxygen) from the outside of the hot box, and air necessary for a chemical reaction is supplied through the stack air supply line 25. In order to increase reaction efficiency, a separate heat exchanger (not shown) may be installed in the stack air supply line 25 to increase the amount of heat of the supplied air. The electrolyte 22 is formed of a solid oxide having high ion conductivity such as a zirconia type, and oxygen ions supplied through the cathode 21 move through the electrolyte 22 to react with hydrogen. The anode 23 is supplied with a fuel gas (hydrogen) from the outside of the hot box. The fuel gas may be a general city gas, a propane gas, or the like. In order to increase reaction efficiency in the stack, the entirety or a portion of the fuel gas may be converted ino highly efficient hydrogen gas and supplied.

Meanwhile, a burner 30, which generates a burner off-gas having a high temperature (or a high temperature burner off-gas) upon receiving a fuel gas and air and supplies the burner off-gas as a heat source in the fuel cell system, is installed in the hot box. The burner 30 is supplied with the fuel gas and fuel required for combustion through two paths.

First, in order to supply a fuel gas to the burner 30, a fuel gas supply line 31 for burner (or burner fuel gas supply line 31) and an anode off-gas (AOG) supply line 32 for burner (or burner AOG supply line 32) are installed in the burner 30. A normal-temperature fuel gas such as general city gas, a propane gas, and the like, is supplied from the outside of the hot box through the burner fuel gas supply line 31. Through the burner AOG supply line 32, an anode off-gas (AOG), which is discharged from the anode 23 of the fuel cell stack 20 and includes a non-reacted hydrogen gas, is supplied. The AOG, which has a high temperature of 700°C or higher immediately after it is discharged from the fuel cell stack 20, is subjected to several heat exchange steps so as to be supplied to the burner 30 generally at a temperature of 70°C.

In order to supply air to the burner 30, an air supply line 33 for burner (or a burner air supply line 33) and a cathode off-gas (COG) supply line 34 for burner (or a burner COG supply line 34) are connected to the burner 30. Air at room temperature is supplied from the outside of the hot box through the burner air supply line 33. A high-temperature cathode off-gas (COG) which is discharged from the cathode 21 of the fuel cell stack 20 and includes non-reacted air, is supplied through the burner COG supply line 34. The COG, which has a high temperature of about 650°C to 700°C immediately after being discharged from the fuel cell stack 20, is directly supplied to the burner 30.

Meanwhile, a high-temperature heat exchanger 40, which generates an anode gas heat-exchanged to a high temperature appropriate for a reaction in the fuel cell stack 20 upon receiving a fuel gas such as the general city gas or a propane gas from the outside of the hot box and supplies the anode gas to the anode 23 of the fuel cell stack 20, is installed inside the hot box.

To this end, a fuel gas supply line 41 for high-temperature heat exchanger (or high-temperature heat exchanger fuel gas supply line 41) which supplies a fuel gas from the outside of the hot box, is connected to the high-temperature heat exchanger 40, and an anode gas supply line 42 supplying an anode gas to the anode 23 of the fuel cell stack 20 is connected to the high-temperature heat exchanger 40. Also, in order to supply a high heat source required for converting the fuel gas to the highly efficient anode gas, a burner off-gas supply line 35 supplying a high-temperature burner off-gas (BOG) discharged from the burner 30 is connected to the high-temperature heat exchanger 40.

Even after passing through the high-temperature heat exchanger 40, the BOG is maintained at a high temperature, and in the related art, the BOG (hereinafter, referred to as "high-temperature heat exchanger passage gas") which has passed through the high-temperature heat exchanger 40 is discharged to the inside of the hot box as is or is used to be heat-exchanged with a portion of a fluid present inside the hot box.

In the present disclosure, the BOG having a high amount of heat is used to preheat the fuel gas or air supplied to the burner 30 to thus optimize overall heat efficiency of the fuel cell system.

As described above, the burner 30 is supplied with the fuel gas or air through two paths. That is, the burner 30 is supplied with the fuel gas containing hydrogen through the burner fuel gas supply line 31 and the burner AOG supply line 32 and is supplied with air containing oxygen through the burner air supply line 33 and the burner COG supply line 34. If a temperature of the fuel gas or air supplied to the burner 30 is high, a burner off-gas having the amount of heat as much may be generated, and thus, higher temperature of the fuel gas or air supplied to the burner 30 is advantageous.

However, the fuel gas supplied through the burner fuel gas supply line 31, as a general city gas or propane gas, is in a normal temperature state and the air supplied through the burner air supply line 33 is also in a room temperature state.

The anode off-gas supplied through the burner AOG supply line 32 has a high temperature immediately after being discharged from the anode 23 of the fuel cell stack 20 but drops in temperature, while passing through the heat-exchange device disposed outside the hot box, to have a temperature of about 70°C at the time when it is supplied to the burner 30 through the burner AOG supply line 32.

However, the COG supplied through the burner COG supply line 34 is supplied to the burner 30, while maintaining the same high temperature as that when it was discharged from the fuel cell stack 20 as is.

As described above, since the difference in the amount of heat used inside the hot box with respect to a total amount of heat supplied from the burner 30 disposed in the hot box determines efficiency of the overall system, it is necessary to recover the amount of heat discharged from the hot box to the outside as much as possible. The inventors of the present application optimized overall heat efficiency of the fuel cell system by installing a recovery heat exchanger 50 for directly or indirectly heat-exchanging the high-temperature AOG at three locations excluding the burner COG supply line 34 to which high-temperature air is supplied, i.e., at the burner fuel gas supply line 31, the burner AOG supply line 32, and the burner air supply line 33, on the basis of results obtained by analyzing a temperature distribution of the fuel gas or air supplied to the burner 30.

FIGS. 1 to 4 illustrate an embodiment in which a heat exchanger using a BOG is installed at the burner air supply line 33.

As illustrated in FIG. 1, the recovery heat exchanger 50 according to the present embodiment is disposed in the hot box, installed at the burner air supply line 33 supplying air to the burner 30 from the outside of the hot box, and is configured to preheat room-temperature air supplied to the burner 30 through the burner air supply line 33 using the high-temperature BOG.

Here, the high-temperature BOG is firstly supplied to the high-temperature heat exchanger 40 through the BOG supply line 35. In the high-temperature heat exchanger 40, the high-temperature BOG is heat-exchanged with a fuel gas supplied through the high-temperature heat exchanger fuel gas supply line 41 to produce an anode gas containing a high-temperature hydrogen gas. As a result, the BOG is generated as a high-temperature heat exchanger passage gas having a temperature lowered through the heat exchange, and the high-temperature heat-exchange passage gas is supplied to the recovery heat exchanger 50 according to the present disclosure through a high-temperature heat exchanger passage gas supply line 36.

The high-temperature heat-exchange passage gas is slightly lowered in temperature through the first heat exchange at the high-temperature heat exchanger 40 but still maintained at a high temperature of 400°C or higher. The high-temperature heat-exchange passage gas having such a high temperature preheats room-temperature air supplied from the outside of the hot box in the recovery heat exchanger 50. The preheated air increases an internal temperature of the burner 30 to reduce usage of fuel. The gas having a temperature lowered through the heat exchange is finally discharged to the outside of the hot box through a recovery heat exchanger passage gas discharge line 37.

In the present embodiment, the gases transferred through the BOG supply line 35, the high-temperature heat exchanger passage gas supply line 36, and the recovery heat exchanger passage gas discharge line 37 is referred to as the "BOG", "high-temperature heat exchanger passage gas", and "recovery heat exchanger passage gas", respectively, but these three terms are merely used to indicate that the gases have passed through the device in which heat exchange takes place and all refer to the BOG discharged from the burner 30. Therefore, the present embodiment may be included in the technical concept of the present disclosure in which the fluid introduced to the burner is preheated using the heat exchanger using the BOG.

An embodiment of FIG. 2 is basically the same as the embodiment of FIG. 1 in that the BOG discharged from the burner 30 is supplied to the recovery heat exchanger 50 installed at the burner air supply line 33 to preheat room-temperature air supplied from the outside of the hot box to the burner 30. However, compared with the embodiment of FIG. 1 in which the BOG discharged from the burner 30 is first supplied to the high-temperature heat exchanger 40 in which heat exchange firstly takes place, and thereafter, heat exchange secondly takes place in the recovery heat exchanger 50, the embodiment of FIG. 2 is different in that the BOG is directly supplied to the recovery heat exchanger 50 through a BOG branch line 35a branched from the BOG supply line 35 so that heat exchange firstly takes place in the recovery heat exchanger 50.

According to the embodiment of FIG. 2, since the high-temperature BOG discharged from the burner 30 is directly supplied to the recovery heat exchanger 50 to preheat the room-temperature air supplied from the outside of the hot box along the burner air supply line 33, air may be heated to a higher temperature. Thus, the present embodiment may be used for a case where ambient air supplied through the burner air supply line 33 is required to have a higher amount of heat in consideration of a total amount of heat of the fuel gas and air supplied to the burner 30.

According to the present invention, the fuel cell system may be configured by one of the embodiment of FIG. 1 (for low temperature) or the embodiment of FIG. 2 (for high temperature) in consideration of that to which temperature ambient air is to be preheated, whereby an operating range of the burner 30 may be more effectively controlled. Also, FIGS. 1 and 2 are disclosed as separate embodiments, but it may also be configured such that the high-temperature heat exchanger passage supply line 36 of FIG. 1 and the BOG branch line 35a of FIG. 2 may be installed together in one fuel cell system and one of the two supply lines may be selectively used using a three-way valve, or the like, in real time.

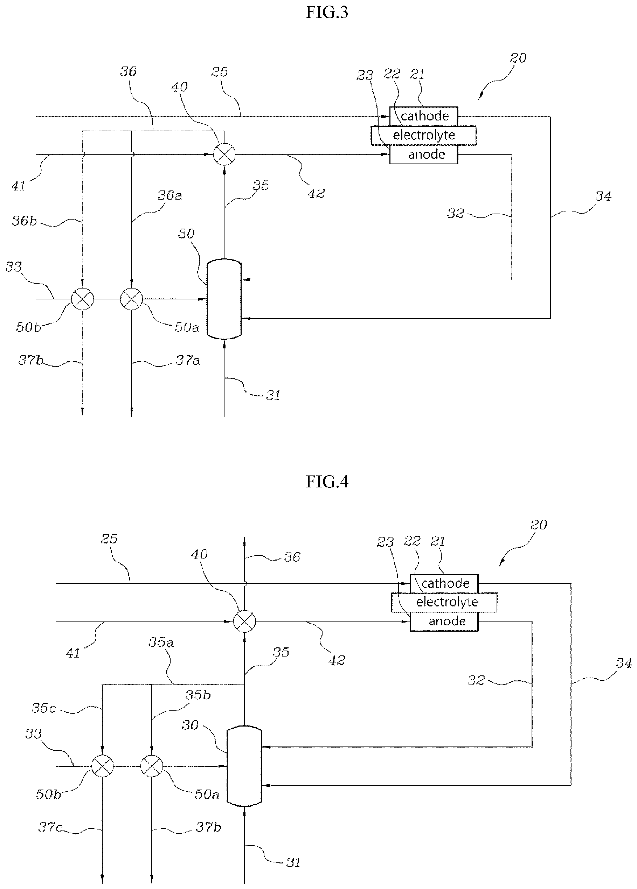

An embodiment of FIG. 3 is the same as the embodiment of FIG. 1 in that the BOG discharged from the burner 30 is firstly heat-exchanged in the high-temperature heat exchanger 40 and subsequently supplied to the recovery heat exchanger 50 installed at the burner air supply line 33 to preheat air supplied from the outside of the hot box to the burner 30. However, compared with the embodiment of FIG. 1 in which only one recovery heat exchanger 50 is provided, the embodiment of FIG. 3 is different in that two recovery heat exchangers, i.e., a first recovery heat exchanger 50a and a second recovery heat exchanger 50b, are installed and the high-temperature heat exchanger passage gas having a high temperature is supplied through a high-temperature heat exchanger passage gas first branch line 36a and a high-temperature heat exchanger passage gas second branch line 36b.

In the recovery heat exchange, heat exchange takes place between the high-temperature BOG and the room-temperature ambient air. However, due to a relatively high passage rate of the fluid, heat exchange may not sufficiently take place. This embodiment solves the problem by performing heat exchange twice. Although two recovery heat exchangers 50a and 50b are illustrated in FIG. 3, the present disclosure is not limited thereto and three or more recovery heat exchangers may also be installed. Reference numerals 37a and 37b denote a recovery heat exchanger passage gas first discharge line and a recovery heat exchanger passage gas second discharge line, respectively.

An embodiment of FIG. 4 is the same as the embodiment of FIG. 2 in that the BOG discharged from the burner 30 is directly branched to the BOG branch line 35a from the BOG supply line 35 and directly supplied to the recovery heat exchanger installed at the burner air supply line 33, without passing through the high-temperature heat exchanger 40. However, compared with the embodiment of FIG. 2 in which only one recovery heat exchanger 50 is provided, the embodiment of FIG. 4 is different in that two recovery heat exchangers, i.e., the first recovery heat exchanger 50a and the second recovery heat exchanger 50b, are installed and the high-temperature BOG is supplied through a BOG first branch line 35b and a BOG second branch line 35c.

According to this, heat exchange may take place sufficiently between the BOG and the ambient air through heat exchange twice, and if necessary, three or more recovery heat exchangers may be installed as mentioned above with reference to FIG. 3. Reference numerals 37b and 37c denote a recovery heat exchanger passage gas first discharge line and a recovery heat exchanger passage gas second discharge line, respectively.

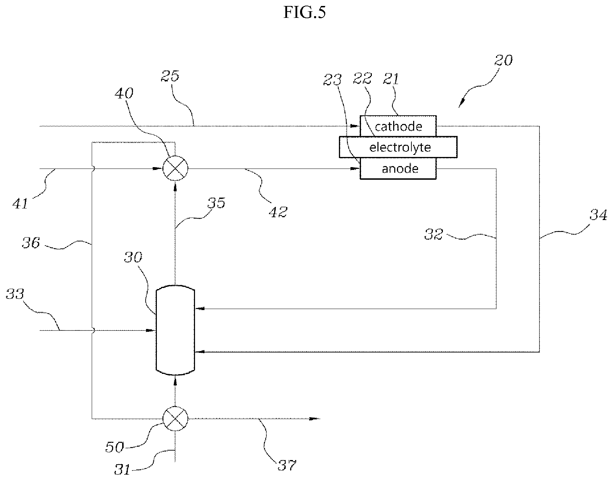

FIGS. 5 to 8 illustrate an embodiment in which a heat exchanger using a BOG is provided at the burner fuel gas supply line 31.

As illustrated in FIG. 5, the recovery heat exchanger 50 is disposed in the hot box, is installed at the burner fuel gas supply line 31 supplying a fuel gas to the burner 30 from the outside of the hot box, and is configured to preheat a room-temperature fuel gas supplied to the burner 30 through the burner fuel gas supply line 31 using the high-temperature BOG.

Here, the high-temperature BOG is firstly supplied to the high-temperature heat exchanger 40 through the BOG supply line 35. In the high-temperature heat exchanger 40, the high-temperature BOG is heat-exchanged with the fuel gas supplied through the high-temperature heat exchanger fuel gas supply line 41 to produce an anode gas including a high-temperature hydrogen gas. As a result, the BOG is generated as a high-temperature heat exchanger passage gas having a temperature lowered through the heat exchange, and the high-temperature heat exchanger passage gas is supplied to the recovery heat exchanger 50 through the high-temperature heat exchanger passage gas supply line 36.

The high-temperature heat-exchange passage gas is slightly lowered in temperature through the first heat exchange at the high-temperature heat exchanger 40 but still maintained at a high temperature of 400°C or higher. The high-temperature heat-exchange passage gas having such a high temperature preheats the room-temperature fuel gas supplied from the outside of the hot box in the recovery heat exchanger 50. The preheated fuel gas increases an internal temperature of the burner 30 to reduce usage of fuel. The gas having a temperature lowered through the heat exchange is finally discharged to the outside of the hot box through the recovery heat exchanger passage gas discharge line 37.

In the present embodiment, all of the BOG, the high-temperature heat exchanger passage gas, and the recovery heat exchanger passage gas refer to the BOG as described above. Therefore, the present embodiment may also be included in the technical concept of the present disclosure in which the fluid introduced to the burner is preheated using the heat exchanger using the BOG.

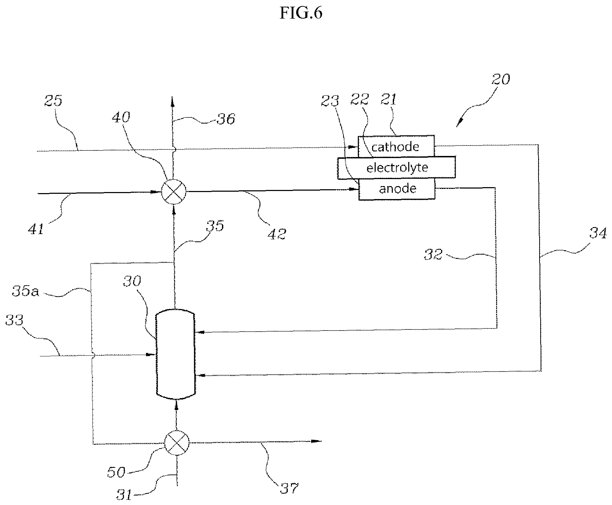

An embodiment of FIG. 6 is basically the same as the embodiment of FIG. 5 in that the BOG discharged from the burner 30 is supplied to the recovery heat exchanger 50 installed at the burner fuel gas supply line 31 to preheat the room-temperature fuel gas supplied from the outside of the hot box to the burner 30. However, compared with the embodiment of FIG. 5 in which the BOG discharged from the burner 30 is first supplied to the high-temperature heat exchanger 40 in which heat exchange firstly takes place, and thereafter, heat exchange secondly takes place in the recovery heat exchanger 50, the embodiment of FIG. 6 is different in that the BOG is directly supplied to the recovery heat exchanger 50 through the BOG branch line 35a branched from the BOG supply line 35 so that heat exchange firstly take place in the recovery heat exchanger 50.

According to the embodiment of FIG. 6, since the high-temperature BOG discharged from the burner 30 is directly supplied to the recovery heat exchanger 50 to preheat the room-temperature fuel gas supplied from the outside of the hot box along the burner fuel gas supply line 31, the fuel gas may be heated to a higher temperature. Thus, the present embodiment may be used for a case where an external fuel gas supplied through the burner fuel gas supply line 31 is required to have a higher amount of heat in consideration of a total amount of heat of the fuel gas and air supplied to the burner 30.

According to the present invention, the fuel cell system may be configured by one of the embodiment of FIG. 5 (for low temperature) or the embodiment of FIG. 6 (for high temperature) in consideration of that to which temperature the external fuel gas is to be preheated, whereby an operating range of the burner 30 may be more effectively controlled. Also, although FIGS. 5 and 6 are disclosed as separate embodiments, it may also be configured such that the high-temperature heat exchanger passage supply line 36 of FIG. 5 and the BOG branch line 35a of FIG. 6 may be installed together in one fuel cell system and one of the two supply lines may be selectively used using a three-way valve, or the like, in real time.

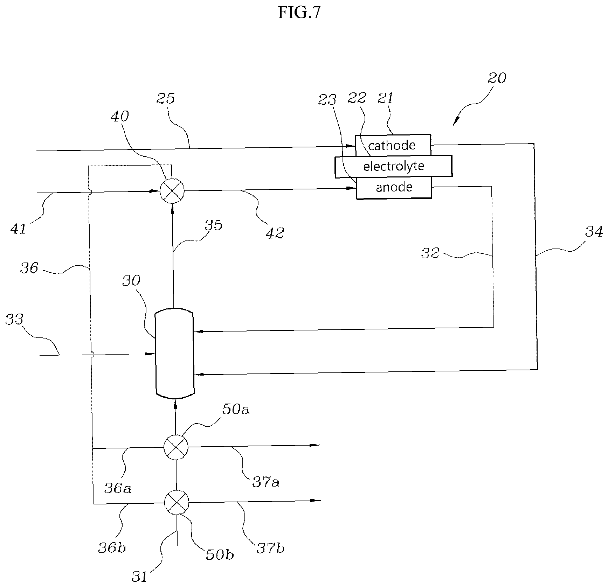

An embodiment of FIG. 7 is the same as the embodiment of FIG. 5 in that the BOG discharged from the burner 30 is firstly heat-exchanged in the high-temperature heat exchanger 40 and subsequently supplied to the recovery heat exchanger 50 installed at the burner fuel gas supply line 31 to preheat the fuel gas supplied from the outside of the hot box to the burner 30. However, compared with the embodiment of FIG. 5 in which only one recovery heat exchanger 50 is provided, the embodiment of FIG. 7 is different in that two recovery heat exchangers, i.e., the first recovery heat exchanger 50a and the second recovery heat exchanger 50b, are installed and the high-temperature heat exchanger passage gas having a high temperature is supplied through the high-temperature heat exchanger passage gas first branch line 36a and the high-temperature heat exchanger passage gas second branch line 36b.

In the recovery heat exchange, heat exchange takes place between the high-temperature BOG and the room-temperature external fuel gas. However, due to a relatively high passage rate of the fluid, heat exchange may not sufficiently take place. This embodiment solves the problem by performing heat exchange twice. Although two recovery heat exchangers 50a and 50b are illustrated in FIG. 7, the present disclosure is not limited thereto and three or more recovery heat exchangers may also be installed. Reference numerals 37a and 37b denote the recovery heat exchanger passage gas first discharge line and the recovery heat exchanger passage gas second discharge line, respectively.

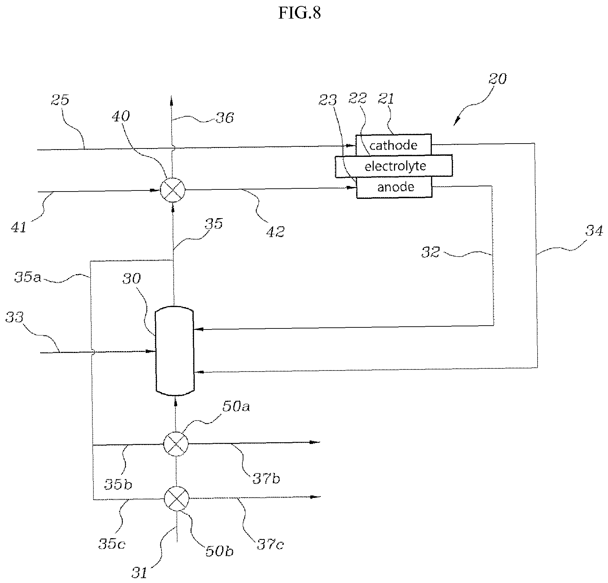

An embodiment of FIG. 8 is the same as the embodiment of FIG. 6 in that the BOG discharged from the burner 30 is directly branched to the BOG branch line 35a from the BOG supply line 35 and directly supplied to the recovery heat exchanger installed at the burner fuel gas supply line 31, without passing through the high-temperature heat exchanger 40. However, compared with the embodiment of FIG. 6 in which only one recovery heat exchanger 50 is provided, the embodiment of FIG. 8 is different in that two recovery heat exchangers, i.e., the first recovery heat exchanger 50a and the second recovery heat exchanger 50b, are installed and the high-temperature BOG is supplied through the BOG first branch line 35b and the BOG second branch line 35c.

According to this, heat exchange may take place sufficiently between the BOG and the external fuel gas through heat exchange twice, and if necessary, three or more recovery heat exchangers may be installed as mentioned above with reference to FIG. 7. Reference numerals 37b and 37c denote the recovery heat exchanger passage gas first discharge line and the recovery heat exchanger passage gas second discharge line, respectively.

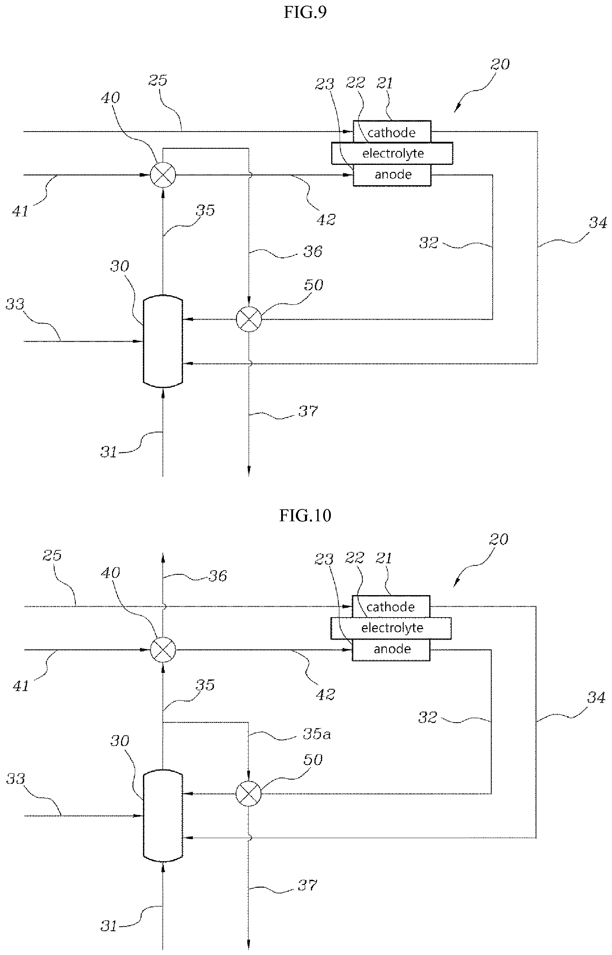

FIGS. 9 to 12 illustrate an embodiment in which a heat exchanger using a BOG is installed at the burner anode off-gas (AOG) supply line 32.

As illustrated in FIG. 9, the recovery heat exchanger 50 is disposed in the hot box, is installed at the burner AOG supply line 32 supplying the AOG containing unburned hydrogen to the burner 30 from the outside of the hot box, and is configured to preheat the AOG supplied to the burner 30 through the burner AOG supply line 32 using the high-temperature BOG.

Since the AOG itself is very hot, the AOG is subjected to a heat recovery step through heat exchange several times. Typically, the AOG is heat-exchanged with hot water, while passing through a heat storage tank (not shown) installed in the fuel cell system. The hot water is used for heating, or the like, in a household. Also, the AOG contains moisture in a vapor state generated during a chemical reaction in the fuel cell stack 20. Thus, in order to supply the AOG to the burner 30 and re-use the unreacted hydrogen, the vapor included in the AOG is required to be removed. To this end, vapor of AOG is discharged, while passing through a condenser (not shown) installed in the fuel cell system, and in this process, heat exchange takes place to lower temperature.

As described above, the AOG is heat exchanged in the process of passing through the heat storage tank for supplying hot water, or the like, or the condenser for separately discharging vapor contained in the AOG, and is generally supplied at a temperature of about 70°C to the burner 30. Thus, according to this embodiment, the 70°C-AOG is preheated using the BOG of 400°C or higher in the recovery heat exchanger 50.

Here, the high-temperature BOG is firstly supplied to the high-temperature heat exchanger 40 through the BOG supply line 35. In the high-temperature heat exchanger 40, the high-temperature BOG is heat-exchanged with a fuel gas supplied through the high-temperature heat exchanger fuel gas supply line 41 to produce an anode gas containing a high-temperature hydrogen gas. As a result, the BOG is generated as a high-temperature heat exchanger passage gas having a temperature lowered through the heat exchange, and the high-temperature heat-exchange passage gas is supplied to the recovery heat exchanger 50 according to the present disclosure through a high-temperature heat exchanger passage gas supply line 36.

The high-temperature heat-exchange passage gas is slightly lowered in temperature through the first heat exchange at the high-temperature heat exchanger 40 but still maintained at a high temperature of 400°C or higher. The high-temperature heat-exchange passage gas having such a high temperature preheats the AOG supplied from the outside of the hot box in the recovery heat exchanger 50. The preheated AOG increases an internal temperature of the burner 30 to reduce usage of fuel. The gas having a temperature lowered through the heat exchange is finally discharged to the outside of the hot box through a recovery heat exchanger passage gas discharge line 37.

In the present embodiment, all of the BOG, the high-temperature heat exchanger passage gas, and the recovery heat exchanger passage gas refer to the BOG as described above. Therefore, the present embodiment may also be included in the technical concept of the present disclosure in which the fluid introduced to the burner is preheated using the heat exchanger using the BOG.

An embodiment of FIG. 10 is basically the same as the embodiment of FIG. 9 in that the BOG discharged from the burner 30 is supplied to the recovery heat exchanger 50 installed at the burner AOG supply line 32 to preheat the AOG supplied from the outside of the hot box to the burner 30. However, compared with the embodiment of FIG. 9 in which the BOG discharged from the burner 30 is first supplied to the high-temperature heat exchanger 40 in which heat exchange firstly takes place, and thereafter, heat exchange secondly takes place in the recovery heat exchanger 50, the embodiment of FIG. 10 is different in that the BOG is directly supplied to the recovery heat exchanger 50 through the BOG branch line 35a branched from the BOG supply line 35 so that heat exchange firstly take place in the recovery heat exchanger 50.

According to the embodiment of FIG. 10, since the high-temperature BOG discharged from the burner 30 is directly supplied to the recovery heat exchanger 50 to preheat the AOG supplied from the outside of the hot box along the burner AOG supply line 32, the AOG may be heated to a higher temperature. Thus, the present embodiment may be used for a case where an external fuel gas supplied through the burner AOG supply line 32 is required to have a higher amount of heat in consideration of a total amount of heat of the fuel gas and air supplied to the burner 30.

According to the present invention, the fuel cell system may be configured by one of the embodiment of FIG. 9 (for low temperature) or the embodiment of FIG. 10 (for high temperature) in consideration of that to which temperature the external fuel gas is to be preheated, whereby an operating range of the burner 30 may be more effectively controlled. Also, although FIGS. 9 and 10 are disclosed as separate embodiments, it may also be configured such that the high-temperature heat exchanger passage supply line 36 of FIG. 9 and the BOG branch line 35a of FIG. 10 may be installed together in one fuel cell system and one of the two supply lines may be selectively used using a three-way valve, or the like, in real time.

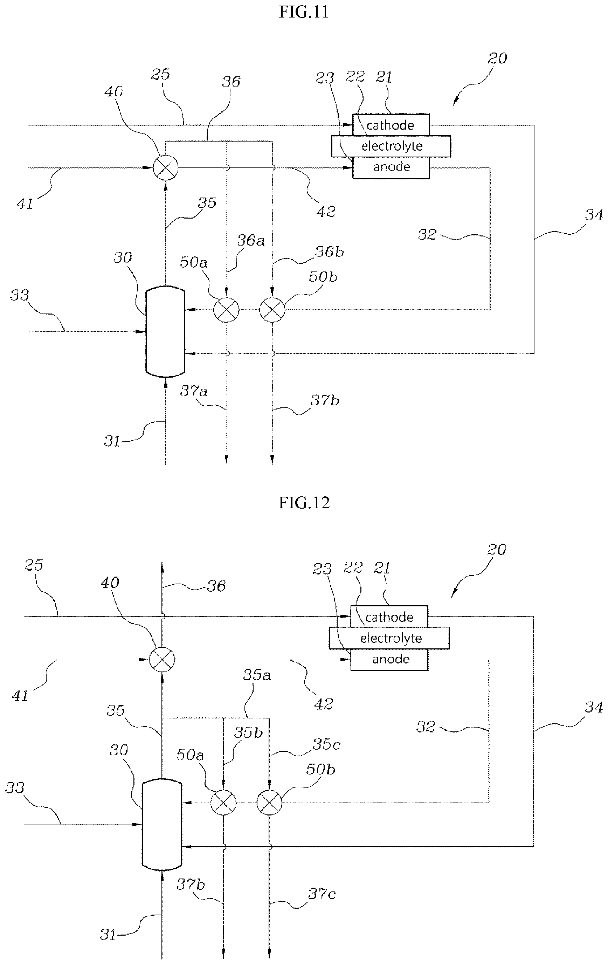

An embodiment of FIG. 11 is the same as the embodiment of FIG. 9 in that the BOG discharged from the burner 30 is firstly heat-exchanged in the high-temperature heat exchanger 40 and subsequently supplied to the recovery heat exchanger 50 installed at the burner AOG supply line 32 to preheat the fuel gas supplied from the outside of the hot box to the burner 30. However, compared with the embodiment of FIG. 9 in which only one recovery heat exchanger 50 is provided, the embodiment of FIG. 11 is different in that two recovery heat exchangers, i.e., the first recovery heat exchanger 50a and the second recovery heat exchanger 50b, are installed and the high-temperature heat exchanger passage gas having a high temperature is supplied through the high-temperature heat exchanger passage gas first branch line 36a and the high-temperature heat exchanger passage gas second branch line 36b.

In the recovery heat exchange, heat exchange takes place between the high-temperature BOG and the AOG. However, due to a relatively high passage rate of the fluid, heat exchange may not sufficiently take place. This embodiment solves the problem by performing heat exchange twice. Although two recovery heat exchangers 50a and 50b are illustrated in FIG. 11, the present disclosure is not limited thereto and three or more recovery heat exchangers may also be installed. Reference numerals 37a and 37b denote the recovery heat exchanger passage gas first discharge line and the recovery heat exchanger passage gas second discharge line, respectively.

An embodiment of FIG. 12 is the same as the embodiment of FIG. 10 in that the BOG discharged from the burner 30 is directly branched to the BOG branch line 35a from the BOG supply line 35 and directly supplied to the recovery heat exchanger installed at the burner AOG supply line 32, without passing through the high-temperature heat exchanger 40. However, compared with the embodiment of FIG. 10 in which only one recovery heat exchanger 50 is provided, the embodiment of FIG. 12 is different in that two recovery heat exchangers, i.e., the first recovery heat exchanger 50a and the second recovery heat exchanger 50b, are installed and the high-temperature BOG is supplied through the BOG first branch line 35b and the BOG second branch line 35c.

According to this, heat exchange may take place sufficiently between the BOG and the external fuel gas through heat exchange twice, and if necessary, three or more recovery heat exchangers may be installed as mentioned above with reference to FIG. 11. Reference numerals 37b and 37c denote the recovery heat exchanger passage gas first discharge line and the recovery heat exchanger passage gas second discharge line, respectively.

Lastly, referring to preheating the fluid supplied to the burner 30 using the BOG discharged from the burner through the BOG supply line 35, preheating ambient air supplied through the burner air supply line 33 as illustrated in FIG. 1 and preheating the fuel gas supplied through the burner fuel gas supply line 31 as illustrated in FIG. 5 or preheating the AOG supplied through the burner AOG supply line 32 as illustrated in FIG. 9 may be different in heat exchange efficiency due to a difference in flow rate between the supply lines. Based on this, utilization of the BOG finally discharged to the outside of the hot box may be designed to be different. In general, a supply flow rate of the BOG supply line 35 is the largest, a supply flow rate of the burner air supply line 33 is the second largest, and a supply flow rate of the burner fuel gas supply line 31 and the burner AOG supply line 32 is relatively very small.

Heat exchange sufficiently takes place between the BOG and the ambient air which are not significantly different in supply flow rate, so a temperature of the finally discharged recovery heat exchanger passage gas is low. As a result, efficiency of heat exchange in the heat storage tank at a follow-up stage is relatively reduced. Meanwhile, heat exchange does not sufficiently take place between the BOG and the fuel gas (or AOG) which are significantly different in supply flow rate, so the temperature of the finally discharged recovery heat exchanger passage gas is high. As a result, efficiency of heat exchange in the heat storage tank at the follow-up stage is relatively increased. Since the fuel cell system is a system capable of simultaneously generating electricity and heat, whether to preheat air or whether to preheat the fuel gas (or AOG) may be selected among the various embodiments of the present disclosure in consideration of efficiency of heat recovery at the heat storage tank.

Although the embodiments of the present disclosure have been described with reference to the accompanying drawings, it will be apparent to a person skilled in the art to which the invention pertains that various changes in forms may be made without departing from the spirit or essential features of the present disclosure. Therefore, the foregoing specific embodiments are intended to be illustrative in all aspects rather than limiting. The scope of the present disclosure shall be defined by the appended claims rather than the foregoing description and it should be interpreted that the present disclosure shall extend to all modifications or changes derived from the definition, ranges, and equivalents of the claims.

## Claims

1. A fuel cell system including a heat exchanger using a burner off-gas (BOG), the fuel cell system comprising:
a hot box formed of a heat insulating material;
a fuel cell stack disposed in the hot box and including a cathode, an electrolyte, and an anode;
a high-temperature heat exchanger disposed in the hot box, generating a high-temperature anode gas including hydrogen upon receiving a fuel gas, and discharging the anode gas to the anode of the fuel cell stack;
a burner disposed in the hot box, generating a high-temperature burner off-gas (BOG) upon receiving a fuel gas and air, and supplying the BOG as a heat source in the fuel cell system; and
a recovery heat exchanger disposed in the hot box, installed at a burner air supply line supplying air to the burner from the outside of the hot box, and preheating air supplied to the burner through the burner air supply line using the high-temperature BOG.

2. The fuel cell system of claim 1, wherein
a BOG gas supply line supplying the BOG to the high-temperature heat exchanger is connected to the burner, and a high-temperature heat exchanger passage gas supply line supplying a high-temperature heat exchanger passage gas produced in the process of generating the anode gas through heat exchange between the BOG and the fuel gas supplied to the high-temperature heat exchanger, to the recovery heat exchanger is connected to the high-temperature heat exchanger.

3. The fuel cell system of claim 1 or 2, wherein
one recovery heat exchanger or two or more recovery heat exchangers are installed at the burner air supply line.

4. A fuel cell system including a heat exchanger using a burner off-gas (BOG), the fuel cell system comprising:
a hot box formed of a heat insulating material;
a fuel cell stack disposed in the hot box and including a cathode, an electrolyte, and an anode;
a high-temperature heat exchanger disposed in the hot box, generating a high-temperature anode gas including hydrogen upon receiving a fuel gas, and supplying the anode gas to the anode of the fuel cell stack;
a burner disposed in the hot box, generating a high-temperature burner off-gas (BOG) upon receiving a fuel gas and air, and supplying the BOG as a heat source in the fuel cell system; and
a recovery heat exchanger disposed in the hot box, installed at a burner fuel gas supply line supplying a fuel gas to the burner from the outside of the hot box, and preheating the fuel gas supplied to the burner through the burner fuel gas supply line using the high-temperature BOG.

5. The fuel cell system of claim 4, wherein
A BOG gas supply line supplying the BOG to the high-temperature heat exchanger is connected to the burner, and a high-temperature heat exchanger passage gas supply line supplying a high-temperature heat exchanger passage gas produced in the process of generating the anode gas through heat exchange between the BOG and the fuel gas supplied to the high-temperature heat exchanger, to the recovery heat exchanger is connected to the high-temperature heat exchanger.

6. The fuel cell system of claim 4 or 5, wherein
recovery heat exchanger or two or more recovery heat exchangers are installed at the burner fuel gas supply line.

7. A fuel cell system including a heat exchanger using a burner off-gas (BOG), the fuel cell system comprising:
a hot box formed of a heat insulating material;
a fuel cell stack disposed in the hot box and including a cathode, an electrolyte, and an anode;
a high-temperature heat exchanger disposed in the hot box, generating a high-temperature anode gas including hydrogen upon receiving a fuel gas, and discharging the anode gas to the anode of the fuel cell stack;
a burner disposed in the hot box, generating a high-temperature burner off-gas (BOG) upon receiving a fuel gas and air, and supplying the BOG as a heat source in the fuel cell system; and
a recovery heat exchanger disposed in the hot box, installed at a burner anode off-gas (AOG) supply line supplying an AOG discharged from the anode of the fuel cell stack to the burner from the outside of the hot box, and preheating the AOG supplied to the burner through the burner AOG supply line using the high-temperature BOG.

8. The fuel cell system of claim 7, wherein
a BOG gas supply line supplying the BOG to the high-temperature heat exchanger is connected to the burner, and a high-temperature heat exchanger passage gas supply line supplying a high-temperature heat exchanger passage gas produced in the process of generating the anode gas through heat exchange between the BOG and the fuel gas supplied to the high-temperature heat exchanger, to the recovery heat exchanger is connected to the high-temperature heat exchanger.

9. The fuel cell system of claim 7 or 8, wherein
one recovery heat exchanger or two or more recovery heat exchangers are installed at the burner AOG supply line.

10. The fuel cell system of claim 7, wherein
the AOG is heat-exchanged, while passing through a heat storage tank installed on the fuel cell system, and subsequently supplied to the burner AOG supply line.

11. The fuel cell system of claim 7 or 10, wherein
vapor of the AOG is separately discharged, while the AOG is passing through a condenser installed on the fuel cell system, and the vapor-free AOG is subsequently supplied to the burner AOG supply line.
